# EUROPÄISCHE PATENTANMELDUNG

(11) **EP 4 686 561 A1**
(43) Veröffentlichungstag der Anmeldung: **04.02.2026**
(21) Anmeldenummer: 25191870.2
(22) Anmeldetag: 25.07.2025
(51) Int. Cl.: B32B 21/02, B32B 21/13

(54) **SCHICHTHOLZPLATTE UND VERFAHREN ZU DEREN HERSTELLUNG**

(30) Priorität: 29.07.2024 AT 5009624 U
(71) Anmelder: Grabner, Josef, 4611 Buchkirchen (AT)
(72) Erfinder: Grabner, Josef, 4611 Buchkirchen (AT)
(74) Vertreter: Burger, Hannes Alfred

(57) **Zusammenfassung**

Die Erfindung betrifft eine Schichtholzplatte (1) mit einer festigkeitsrelevanten Kernschicht (4), welche eine OSB-Platte (5) umfasst oder durch eine OSB-Platte (5) gebildet ist. Die Schichtholzplatte (1) umfasst weiters eine Ausgleichsschicht (6) an wenigstens einer der beiden Flachseiten der OSB-Platte (5), welche Ausgleichsschicht (6) durch ein Schälfurnier (7) gebildet ist. Eine dekorative Decksicht (8) ist an der von der OSB-Platte (5) abgewandten Flachseite des wenigstens einen Schälfurniers (7) angeordnet, welche dekorative Deckschicht (8) durch ein Messerfurnier (9) gebildet ist. Weiters bezieht sich die Erfindung auf ein Herstellungsverfahren und auf die Verwendung einer solchen Schichtholzplatte im Saunabereich.

## Beschreibung

Die Erfindung betrifft eine Schichtholzplatte, ein Verfahren zur Herstellung einer Schichtholzplatte, sowie eine Verwendung einer solchen Schichtholzplatte.

Bekannt und weitläufig verbreitet sind mehrschichtige Platten aus Holz für allgemeine Bau- und Konstruktionszwecke. Dabei sind die einzelnen Holzschichten in Bezug auf deren Faserrichtung bevorzugt einander kreuzend ausgerichtet und miteinander verleimt. Solche Kreuzlagenholzplatten weisen im Vergleich zu einlagigen Massivholzplatten deutlich geringeren, feuchtigkeitsbedingten Verzug auf. Sie sind daher beispielsweise für Betonschalungen oder für Verkleidungen im Innen- und Außenbereich gut geeignet.

Weiters sind sogenannte Multiplex-Platten für den Möbelbau bzw. zur Verarbeitung in Tischlereien bekannt. Diese Platten bestehen aus einer Vielzahl, typischerweise aus zumindest fünf, kreuzweise miteinander verleimter Lagen aus Starkfurnier (Sperrholzkern). Eine Seite oder beide Seiten dieses Plattenkerns aus vielen Starkfumier-Lagen sind für dekorative Zwecke beschichtet, beispielsweise mittels Melamin, und/oder mit einer relativ dünnen Furnierschicht aus Holz bedeckt. Solche Holzplatten sind für Anwendungen mit erhöhten ästhetischen Anforderungen gut geeignet, sie sind jedoch vergleichsweise aufwändig in der Produktion und damit relativ kostenintensiv.

Der aus der DE10030457A1 bekannte Aufbau einer Schichtholzplatte soll eine verbesserte Biegesteifigkeit bieten.

Weitere Aufbauten von Schichtholzplatten sind aus der EP0519153A1 oder der EP3127695A1 bekannt. Der Aufbau gemäß der erstgenannten EP-Publikation soll auch unter Verwendung weniger witterungsbeständiger Hölzer eine hohe Lebensdauer bieten. Der Aufbau gemäß der zweitgenannten EP-Publikation besitzt hohe Schubsteifigkeit und einen hohen E-Modul in Längsrichtung, ist jedoch komplex und damit für viele Anwendungszwecke ungeeignet bzw. unwirtschaftlich.

Aufgabe der vorliegenden Erfindung war es, die Nachteile des Standes der Technik zu überwinden und eine mehrschichtige Platte zu schaffen, welche wenigstens eine dekorative Flachseite aus Holz oder in Holzoptik aufweist, eine geringe Anfälligkeit für feuchtigkeitsbedingten Verzug aufweist und trotzdem möglichst kostengünstig hergestellt werden kann.

Diese Aufgabe wird durch eine Schichtholzplatte und durch ein Herstellungsverfahren gemäß den Ansprüchen gelöst.

Die erfindungsgemäße Schichtholzplatte, umfasst eine festigkeitsrelevante Kernschicht, welche Kernschicht eine OSB-Platte umfasst oder durch eine OSB-Platte gebildet ist. Die Schichtholzplatte umfasst weiters eine Ausgleichsschicht an wenigstens einer der beiden Flachseiten der OSB-Platte, welche Ausgleichsschicht durch ein Schälfurnier gebildet ist. Zudem weist die Schichtholzplatte eine dekorative Decksicht an der von der OSB-Platte abgewandten Flachseite des wenigstens einen Schälfurniers auf, welche dekorative Deckschicht durch ein Messerfurnier gebildet ist.

Die erfindungsgemäße Schichtholzplatte bietet eine hohe mechanische Stabilität bzw. Belastbarkeit. Zudem besitzt sie eine geringe Anfälligkeit für unerwünschten Verzug, insbesondere im Vergleich zu mehrlagigen Sperrholz- oder Massivholzplatten. Hauptsächlich kann mit dem erfindungsgemäßen Aufbau der Schichtholzplatte eine hohe Qualität, eine optisch ansprechende bzw. dekorative Holzoberfläche in einer Vielzahl von Holzarten, und dennoch eine hohe Wirtschaftlichkeit erzielt werden. Das wenigstens eine Schälfurnier unterstützt dabei eine zuverlässige bzw. qualitative Kopplung, insbesondere eine hochfeste Anbringung des vergleichsweise dünnen bzw. filigranen, hochwertigen Messerfurniers als dekorative Deckschicht der Schichtholzplatte, insbesondere in Bezug auf deren OSB-Platte.

Ferner bietet die angegebene Schichtholzplatte eine gute Weiterverarbeitbarkeit in Tischlereien oder anderen Handwerksbetrieben, nachdem unerwünschte Löcher oder Hohlstellen im Inneren des Plattenaufbaus hintangehalten werden können. Solche unerwünschten Fehlstellen im vorbekannten Plattenaufbau können durch Ausfalläste oder durch Risse im Schälfurnier verursacht werden, oder durch Toleranzen bei der Sperrholzproduktion hervorgerufen werden und können diese Fehlerquellen nur schwer bzw. nur aufwändig unterbunden werden. Diese Löcher bzw. kleinen Hohlräume in vorbekannten Plattenaufbauten konnten bei Schneid- oder Fräsbearbeitungen an den vorbekannten Platten mit Sperrholzkern oder Massivholzkern überraschend zum Vorschein kommen. Diese Qualitätsprobleme können durch den erfindungsgemäßen Aufbau deutlich reduziert oder eliminiert werden.

Darüber hinaus bietet die angegebene Schichtholzplatte einen hohen Schraubenauszugswiderstand bei dennoch ansprechendem optischem Erscheinungsbild mit natürlicher Holzoptik. Die jeweilige Holzoptik kann in einfacher Art und Weise durch entsprechende Auswahl aus Standard- oder Edelhölzern bestimmt werden. Der hohe Schraubenauszugswiderstand ist maßgeblich durch die Kernschicht bestimmt, nämlich durch die zentrale OSB-Platte.

Die Kernschicht der erfindungsgemäßen Schichtholzplatte kann auch als Plattenkern bzw. als zentrale Tragschicht bezeichnet werden. Die OSB-Platte kann auch als Grobspanplatte bezeichnet werden, welche längliche Holzspäne oder Furnierstücke aufweist, welche mit deren Flachseiten im Wesentlichen übereinander liegend angeordnet und im Wesentlichen einheitlich orientiert sind, und welche länglichen Holzspäne oder Furnierstücke in einem Pressvorgang mittels einem Bindemittel miteinander verbunden worden sind. Der überwiegende Anteil der länglichen Holzspäne oder Furnierstücke liegt dabei in einer Größenordnung von bis zu einigen Zentimetern.

Entsprechend einer vorteilhaften Ausführungsform kann vorgesehen sein, dass beide Flachseiten der OSB-Platte mit je einem Schälfurnier bedeckt sind. Dadurch können beide Flachseiten der OSB-Platte quasi indirekt geglättet werden bzw. mit einer verringerten Oberflächenrauigkeit oder Welligkeit versehen werden. Ein hoher Glättungs- bzw. Ausgleichseffekt in Bezug auf die Oberfläche der OSB-Platte kann vor allem dann erreicht werden, wenn das wenigstens eine Schälfurnier aus weichen Hölzern gebildet ist, beispielsweise aus Fichte, Birke, Erle, Ceiba oder Gabun.

Gemäß einer weiteren Ausführungsform kann vorgesehen sein, dass eines der beiden Schälfurniere an der von der OSB-Platte abgewandten Flachseite mit einer Gegenzugschicht bedeckt ist, beispielsweise mit einem im Vergleich zur dekorativen Deckschicht geringwertigeren Messerfurnier bedeckt ist. Dadurch kann auf kostengünstige Art und Weise ein möglichst symmetrischer und besonders verzugsfreier Aufbau der Schichtholzplatte geschaffen werden.

Vorteilhaft ist auch eine Ausprägung, gemäß welcher die Schichtholzplatte aus einer einzigen OSB-Platte als festigkeitsrelevante Kernschicht, aus je einem Schälfurnier an den beiden Flachseiten der OSB-Platte, und aus je einem Messerfurnier an den beiden von der OSB-Platte abgewandten Flachseiten der beiden Schälfurniere und aus zwischen diesen Schichten angeordneten Leimschichten besteht. Dadurch kann ein Optimum zwischen mechanischer Stabilität bzw. Belastbarkeit, geringer Verzugsanfälligkeit und hoher Wirtschaftlichkeit der Schichtholzplatte erzielt werden.

Insbesondere kann es zweckmäßig sein, wenn die OSB-Platte eine Dicke zwischen 10 mm und 15 mm, vorzugsweise von etwa 12mm, das Schälfurnier eine Dicke zwischen 1,5 mm und 4,0 mm, vorzugsweise von etwa 2,5mm, und das dekorative Messerfurnier eine Dicke zwischen 0,5 mm und 1,5 mm, vorzugsweise von etwa 0,6 mm, aufweist. Dies ermöglicht eine ressourcenschonende Produktion einer Schichtholzplatte mit hohen ästhetischen Anforderungen. Das relativ dünne Messerfurnier begünstigt einen geringen Verbrauch an Standard- oder Edelhölzern. Die festigkeitsrelevante OSB-Platte kann vollständig oder teilweise auf einer Restholzverwertung basieren und damit ebenso zur Ressourcenschonung beitragen.

Die Gesamtdicke einer verarbeitungsbereiten bzw. einsatzfertigen Schichtholzplatte kann ausgewählt sein aus dem Wertebereich zwischen 10 mm und 24 mm, beispielsweise etwa 16 mm betragen.

Ferner kann vorgesehen sein, dass wenigstens eines der beiden Schälfurniere an der von der OSB-Platte abgewandten Flachseite eine Kalibrieroberfläche ausbildet, welche Kalibrieroberfläche durch eine Dickenkalibrierung an dem Schichtverbund aus OSB-Platte und Schälfurnier, insbesondere durch einen Schleif- oder Fräsvorgang am Schälfurnier, erhalten worden ist. Dadurch kann eine hohe Qualität der Schichtholzplatte sichergestellt werden. Insbesondere können dadurch Welligkeiten bzw. Dickenschwankungen vor allem ausgehend von der OSB-Platte reduziert werden. Dabei dient das relativ homogene Schälfurnier als Toleranzkompensator bzw. als vorteilhafte Ausgleichsschicht. Das Schälfurnier, welches vorzuzugsweise aus weichen Hölzern wie zum Beispiel aus Fichte, Birke, Erle, Ceiba oder Gabun gebildet ist, bietet dabei eine einfache bzw. gute Bearbeitbarkeit durch Flächenschleifen oder Fräsen. Die Qualität der angegebenen Schichtholzplatte wird weiters dadurch begünstigt, dass das relativ dünne und hochwertige Messerfurnier auf der relativ ebenen bzw. planen Fläche des dickenkalibrierten Verbundes aus OSB-Platte und Schälfurnier zuverlässig, insbesondere hochfest bzw. vollflächig angebracht werden kann, insbesondere daran angeleimt werden kann.

Ferner kann es zweckmäßig sein, wenn die OSB-Platte eine formaldehydfrei oder formaldehydarm aufgebaute OSB-Platte ist, beispielsweise durch eine OSB-Platte gemäß DIN EN 13986 und gemäß Formaldehyd-Klasse E1 mit einem Formaldehydgehalt von ≤ 8 mg Formaldehyd pro 100 g Werkstoff gebildet ist. Dadurch ist eine geringe bzw. unbedenkliche Emission von Schadstoffen, insbesondere von Formaldehyd sichergestellt. Die Schichtholzplatte kann dadurch auch in Wohnbereichen und vor allem auch in Bereichen mit einem untypischen Klima, insbesondere in Saunabereichen, vorteilhaft eingesetzt werden.

Darüber hinaus kann vorgesehen sein, dass die OSB-Platte, die Schälfurniere und das wenigstens eine Messerfurnier mittels einem formaldehydfreien oder formaldehydarmen, vorzugsweise kochfesten Holzleim, beispielsweise gemäß der Klasse bzw. Beanspruchungsgruppe D4, miteinander verbunden sind. Auch dadurch kann sichergestellt werden, dass eine Verwendung der Schichtholzplatte bei hohen Beanspruchungen und unter schwierigen klimatischen Bedingungen, wie beispielsweise im Saunabereich, verbessert ermöglicht ist.

Zweckmäßigerweise ist die OSB-Platte eine Grobspanplatte, vorzugsweise eine OSB/3- oder OSB/4-Platte, oder eine OSB/3- und OSB/4-Platte gemäß DIN EN 13986. Deren Späne oder Furnierstücke können längs und/oder quer orientiert in mehreren Schichten angeordnet sein und mit einem Bindemittel verklebt sein. Insbesondere kann der überwiegende Anteil der Späne oder Furnierstücke im Wesentlichen parallel zu den Flachseiten der OSB-Platte ausgerichtet sein. Eine solche OSB-Platte bietet wirtschaftliche und qualitative Vorteile im Schichtaufbau der angegebenen Schichtholzplatte.

Die Aufgabe der Erfindung wird weiters durch ein Herstellungsverfahren gemäß den Ansprüchen gelöst.

Das Verfahren zum Herstellen einer Schichtholzplatte, welche gemäß den Ansprüchen für die Schichtholzplatte ausgeführt sein kann, umfasst folgende Verfahrensschritte:
- Bereitstellen einer OSB-Platte,
- Bereitstellen von Schälfurnier,
- Bereitstellen von Messerfurnier,
- Anbringen, insbesondere Aufleimen, des Schälfurniers an wenigstens einer der beiden Flachseiten der OSB-Platte,
- Anbringen, insbesondere Aufleimen, des Messerfurniers an der von der OSB-Platte abgewandten Flachseite des wenigstens einen Schälfurniers,
- wobei das wenigstens eine Messerfurnier als dekorative Deckschicht der Schichtholzplatte eingesetzt wird, und
- wobei das wenigstens eine Schälfurnier zwischen der OSB-Platte und dem wenigstens einen Messerfurnier als Ausgleichsschicht für Dickentoleranzen bzw. Dickenschwankungen oder Welligkeiten der OSB-Platte eingesetzt wird.

Mit diesem Herstellungsverfahren kann eine qualitativ hochwertige Schichtholzplatte effizient und wirtschaftlich produziert werden. Weitere damit einhergehende Vorteile und technische Wirkungen sind den vorstehenden und den nachstehenden Beschreibungsteilen zu entnehmen.

Zweckmäßig kann es dabei auch sein, wenn nach dem Anbringen des wenigstens einen Schälfurniers an der OSB-Platte, insbesondere nach dem Erhärten bzw. Aushärten der Leimverbindung, ein Schichtverbund aus OSB-Platte und Schälfurnier einer Dickenkalibrierung unterzogen wird, beispielsweise indem ein Schleif- oder Fräsvorgang an dem wenigstens einen Schälfurnier ausgeführt wird, bevor das wenigstens eine Messerfurnier an dem wenigstens einen Schälfurnier angebracht wird, insbesondere daran angeleimt wird. Dadurch können typische Oberflächen-Welligkeiten oder Dickentoleranzen der OSB-Platte effizient ausgeglichen bzw. unschädlich gemacht werden. Zudem ist dadurch eine dauerhafte bzw. haftstarke Anbringung auch von besonders dünnen und somit ressourcenschonenden Messerfurnieren als dekorative Deckschicht erzielbar. Insbesondere können so die Kriterien Qualität, Ästhetik und Wirtschaftlichkeit verbessert in Einklang gebracht werden.

Insbesondere kann vorgesehen sein, dass eine Dickenkalibrierung an dem Verbund aus OSB-Platte und dem wenigsten einen daran befestigten Schälfurnier derart ausgeführt wird, dass typische Dickentoleranzen oder Welligkeiten der OSB-Platte durch Materialabtragung an dem wenigstens einen Schälfurnier zumindest teilweise kompensiert werden, insbesondere in einen vorbestimmten Toleranzbereich in Bezug auf die Dicke der letztendlich hergestellten Schichtholzplatte gebracht werden. Mit diesen Maßnahmen können auf effiziente Art und Weise qualitativ hochwertige und trotzdem möglichst kostengünstige Schichtholzplatten erzeugt werden.

Das Schälfurnier kann insbesondere durch Schälen von vorzugsweise gekochtem oder vorzugsweise gedämpftem Rundholz hergestellt sein, wobei während des Schälvorganges das Rundholz um dessen Stammachse rotiert wird. Ein solches Schälfurnier kann relativ effizient und somit kostengünstig bereitgestellt werden. Typische Schälriefen an der Oberfläche des Schälfurniers spielen dabei im anspruchsgemäßen Aufbau der Schichtholzplatte keine wesentliche Rolle. Zudem kann ein solches Schälfurnier problemlos als sogenanntes Starkfurnier ausgeführt sein und somit unkompliziert eine Dicke ausgewählt aus dem Bereich zwischen 1,5 mm und 4,0 mm besitzen.

Das Messerfurnier kann durch Messern oder Sägen von vorzugsweise gekochtem oder vorzugsweise gedämpften Holz hergestellt sein, wobei während des Messer- oder Sägevorganges ein Schneidmesser oder ein Sägeblatt, beispielsweise einer Band- oder Kreissäge, und das Holz entlang der Stammachse des Holzes relativ zueinander bewegt werden. Dadurch können relativ dünne Holzfurniere für dekorative bzw. ästhetische Zwecke in hoher Qualität gefertigt werden. Eine Schonung von natürlichen Holzressourcen kann dadurch unterstützt werden. Aber auch wirtschaftlichen Aspekten kann dadurch verbessert Rechnung getragen werden.

Eine anspruchsgemäße Schichtholzplatte ist optimal in der Verwendung als Bauplatte für die Errichtung von Saunen. Insbesondere kann die Schichtholzplatte als Innenverkleidung von Saunen, beispielsweise als Wand- und/oder Deckenverkleidung, vorteilhaft verwendet werden.

Zum besseren Verständnis der Erfindung wird diese anhand der nachfolgenden Figuren näher erläutert.

Es zeigen jeweils in stark vereinfachter, schematischer Darstellung:
- Fig. 1: Eine Schichtholzplatte in perspektivischer Ansicht;
- Fig. 2: die Schichtholzplatte nach Fig. 1 in Schnittdarstellung;
- Fig. 3: ein Herstellungsverfahren für eine Schichtholzplatte gemäß Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

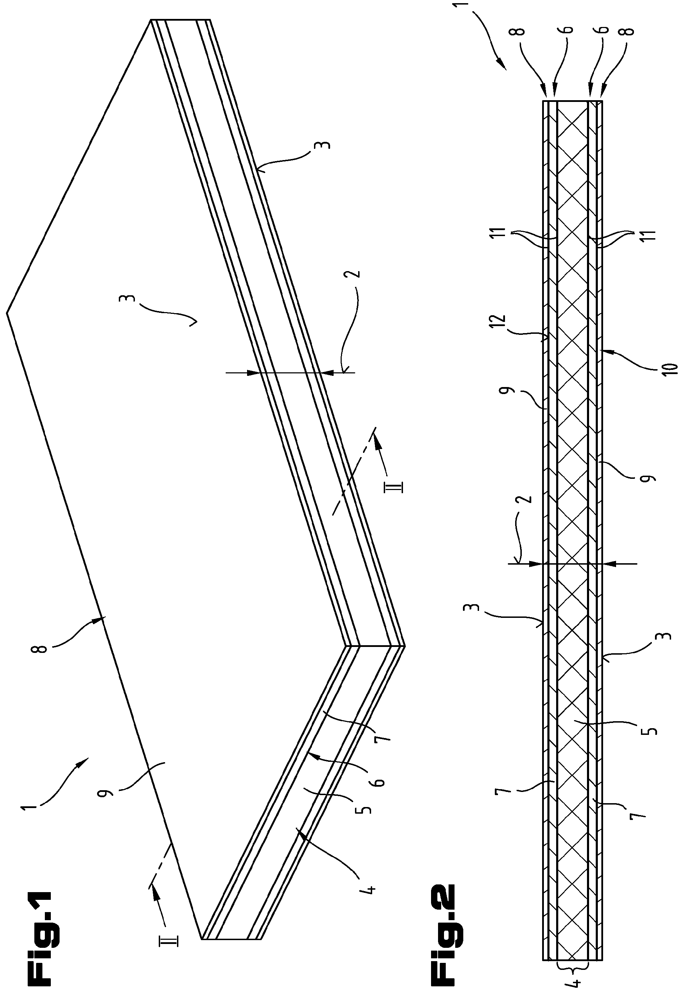

In Fig. 1 ist eine Ausführungsform einer Schichtholzplatte 1 gezeigt. Beispielsgemäß kann diese Schichtholzplatte 1 aus fünf dauerhaft miteinander verbunden, insbesondere miteinander verleimten Holzschichten gebildet sein. Typische Längen- und Breitenabmessungen dieser Schichtholzplatte 1 können im Bereich zwischen 100 cm und 400 cm liegen. Ein übliches Plattenformat beträgt beispielsweise 250 cm mal 125 cm. Eine konstante Dicke 2 dieser Schichtholzplatte 1 kann zwischen 10 mm und 24 mm liegen, beispielweise 16 mm betragen.

Wenigstens eine der beiden Flachseiten 3 der Schichtholzplatte 1 ist dabei als Holzoberfläche ausgeführt, welche ästhetischen bzw. gestalterischen Ansprüchen gerecht wird.

Die Schichtholzplatte 1 kann als Bauplatte verwendet werden, insbesondere für den Möbel- oder Innenausbau.

In Fig. 2 ist ein Ausführungsbeispiel einer vorteilhaft aufgebauten, mehrschichtigen Schichtholzplatte 1 in schematischer Schnittdarstellung gezeigt.

Diese Schichtholzplatte 1 umfasst eine festigkeitsrelevante, zentrale Kernschicht 4. Diese Kernschicht 4 ist gebildet durch eine OSB-Platte 5 oder kann wenigstens eine OSB-Platte 5 umfassen. Unter einer OSB-Platte 5 ist eine Grobspanplatte mit flachen Holzspänen oder Furnierstücken zu verstehen, welche überwiegend in dieselbe Richtung weisen, also im Wesentlichen einheitlich ausgerichtet sind.

Die Schichtholzplatte 1 umfasst weiters wenigstens eine Ausgleichsschicht 6 an wenigstens einer der beiden Flachseiten der OSB-Platte 5, welche Ausgleichsschicht 6 durch ein Schälfurnier 7 gebildet ist. Eine dekorative Decksicht 8 ist an der von der OSB-Platte 5 abgewandten Flachseite des wenigstens einen Schälfurniers 7 ausgebildet. Diese wenigstens eine dekorative Deckschicht 8 der Schichtholzplatte 1 ist durch ein Messerfurnier 9 gebildet. Die vom Schälfurnier 7 abgewandte Flachseite des Messerfurniers 9 definiert wenigstens eine der beiden Flachseiten 3 der Schichtholzplatte 1, insbesondere deren Dekor- bzw. Sichtseite.

Entsprechend der dargestellten, vorteilhaften Ausführungsform der Schichtholzplatte 1 sind beide einander gegenüberliegenden Flachseiten der OSB-Platte 5 mit je einem Schälfurnier 7 bedeckt.

Zur Minimierung der Herstellungskosten der Schichtholzplatte 1 kann eines der beiden Schälfurniere 7 an der von der OSB-Platte 5 abgewandten Flachseite mit einer einfachen Gegenzugschicht 10 bedeckt sein, beispielsweise mit einem im Vergleich zur dekorativen Deckschicht 8 geringwertigeren Messerfurnier bedeckt sein.

Die in den Fig. 1 und 2 dargestellte vorteilhafte Ausführungsform einer Schichtholzplatte 1 besteht aus einer einzigen OSB-Platte 5 als festigkeitsrelevante Kernschicht 4, aus je einem Schälfurnier 7 an den beiden Flachseiten der OSB-Platte 5, und aus je einem Messerfurnier 9 an den beiden von der OSB-Platte 5 abgewandten Flachseiten der beiden Schälfurniere 7 und aus zwischen diesen Schichten angeordneten Leimschichten 11.

Die OSB-Platte 5 kann eine Dicke zwischen 10 mm und 15 mm, vorzugsweise von etwa 12 mm aufweisen. Das eingesetzte Schälfurnier 7 kann im Ausgangszustand eine Dicke zwischen 1,5 mm und 4,0 mm, vorzugsweise von etwa 2,5 mm aufweisen. Das dekorative Messerfurnier 8 kann eine Dicke zwischen 0,5 mm und 1,5 mm, vorzugsweise von etwa 0,6 mm aufweisen. Die jeweiligen Dicken sind dabei als gleichbleibend und als ausgewählt aus den jeweiligen Wertebereichen zu verstehen.

Vor allem wenn die Schichtholzplatte 1 für Anwendungen im Saunabau vorgesehen ist, ist es zweckmäßig, wenn die OSB-Platte 5 eine formaldehydfrei oder formaldehydarm aufgebaute OSB-Platte 5 ist, insbesondere durch eine OSB-Platte gemäß DIN EN 13986 und gemäß Formaldehyd-Klasse E1 gebildet ist, welche einen Formaldehydgehalt von ≤ 8 mg Formaldehyd pro 100 g Werkstoff aufweist. In diesem Zusammenhang kann es auch zweckmäßig sein, wenn die OSB-Platte 5, die Schälfurniere 7 und das wenigstens eine Messerfurnier 9 mittels einem formaldehydfreien oder formaldehydarmen Holzleim, beispielsweise der Beanspruchungsgruppe D4, zur Ausbildung der Leimschichten 11 miteinander verbunden sind.

Wie vorstehend bereits ausgeführt, ist die OSB-Platte 5 eine Grobspanplatte. Vorteilhaft ist es, wenn die OSB-Platte 5 eine OSB/3- oder OSB/4-Platte, oder eine OSB/3- und OSB/4-Platte gemäß DIN EN 13986 ist, deren Späne oder Furnierstücke längs und/oder quer orientiert in mehreren Schichten angeordnet und mit einem Bindemittel verklebt sind.

Zur Erzielung einer hohen Produktqualität der Schichtholzplatte 1 ist es zweckmäßig, wenn wenigstens eines der beiden Schälfurniere 7 an der von der OSB-Platte 5 abgewandten Flachseite eine Kalibrieroberfläche 12 ausbildet, welche Kalibrieroberfläche 12 durch eine Dickenkalibrierung an dem Schichtverbund aus OSB-Platte 5 und Schälfurnier 7, insbesondere durch einen Schleif- oder Fräsvorgang am Schälfurnier 7, erhalten worden ist, wie dies auch nachstehend noch dargelegt wird.

Das eingesetzte Schälfurnier 7 ist durch Schälen von gegebenenfalls gekochtem oder gegebenenfalls gedämpftem Rundholz hergestellt, wobei während des Schälvorganges das zu verarbeitende Rundholz um dessen Stammachse rotiert wird. Dies ermöglicht eine rationelle und kostengünstige Bereitstellung von relativ dicken Furnieren, insbesondere von sogenannten Starkfurnieren.

Das eingesetzte Messerfurnier 9 ist durch Messern oder Sägen von gegebenenfalls gekochtem oder gegebenenfalls gedämpften Holzstücken hergestellt. Diese Holzstücke können beispielsweise durch längliche Stammhälften oder Stammviertel gebildet sein. Während des Messer- oder Sägevorganges werden ein Schneidmesser oder ein Sägeblatt, beispielsweise von einer Band- oder Kreissäge, respektive das Holzstück entlang der Stammachse des Holzstückes zueinander relativbewegt.

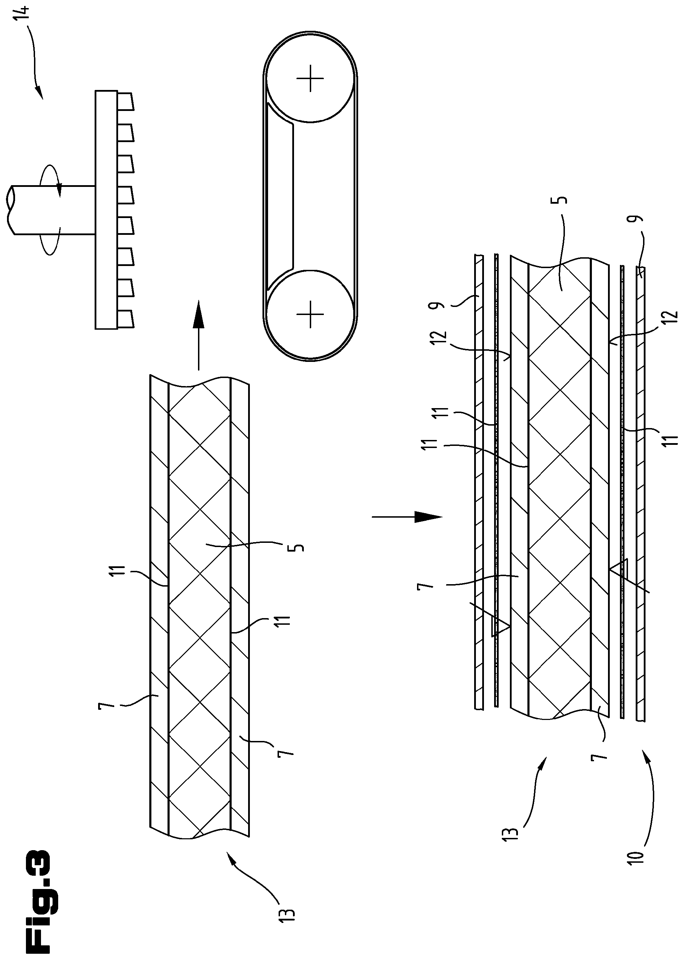

In Fig. 3 ist ein Verfahren zum Herstellen einer Schichtholzplatte 1 gemäß den Fig. 1 und 2 stark schematisch und auszugsweise veranschaulicht.

Das Herstellungsverfahren umfasst die Bereitstellung einer OSB-Platte 5, die Bereitstellung von Schälfurnier 7, und die Bereitstellung von Messerfurnier 9. Das Schälfurnier 7 wird an wenigstens einer der beiden Flachseiten der OSB-Platte 5, vorzugsweise an beiden Flachseiten der OSB-Platte 5, flächendeckend angebracht, insbesondere mittels einer Leimschicht 11 angeleimt.

Zweckmäßig ist es, wenn nach dem Anbringen des wenigstens einen Schälfurniers 7 an der OSB-Platte 5, insbesondere nach dem Erhärten der Leimverbindung, der Schichtverbund 13 aus OSB-Platte 5 und Schälfurnier 7 einer Dickenkalibrierung 14 unterzogen wird, beispielsweise indem ein Schleif- oder Fräsvorgang an dem wenigstens einen Schälfurnier 7 ausgeführt wird. Diese Dickenkalibrierung 14 erfolgt vorzugsweise vor dem Anbringen, insbesondere vor dem Anleimen, des wenigstens einen Messerfurniers 9 an dem wenigstens einen Schälfurnier 7. Dadurch können übliche Maßtoleranzen, welche überwiegend durch die relativ groben Späne der OSB-Platte 5 hervorgerufen werden, zumindest teilweise ausgeglichen bzw. kompensiert werden.

Diese vorteilhaft auszuführende Dickenkalibrierung 14 erfolgt derart, dass typische Dickentoleranzen oder Welligkeiten der OSB-Platte 5 durch Materialabtragung an dem wenigstens einen Schälfurnier 7 zumindest teilweise kompensiert werden. Insbesondere kann durch die Dickenkalibrierung 14 des genannten Sichtverbundes 13 gewährleistet werden, dass die letztendlich hergestellte Schichtholzplatte 1 in einem vorbestimmten Toleranzbereich in Bezug auf deren Dicke 2 liegt.

Auf den genannten Schichtverbund 13 wird später das wenigstens eine Messerfurnier 9 an der von der OSB-Platte 5 abgewandten Flachseite des wenigstens einen Schälfurniers 7 angebracht, insbesondere angeleimt. Dadurch wird eine hochfeste bzw. eine hohen Qualitätsansprüchen genügende Anbringung eines relativ dünnen Messerfurniers 9 an den relativ welligen bzw. eine hohe Oberflächenrauigkeit aufweisenden OSB-Platten 5 erzielt. Das wenigstens eine Messerfurnier 7 definiert dabei die dekorative Deckschicht 8 der Schichtholzplatte 1. Das wenigstens eine Schälfurnier 7 zwischen der OSB-Platte 5 und dem wenigstens einen Messerfurnier 9 wird als Ausgleichsschicht 6 für Dickentoleranzen oder Welligkeiten der OSB-Platte 5 eingesetzt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Schichtholzplatte
- 2: Dicke
- 3: Flachseite
- 4: Kernschicht
- 5: OSB-Platte
- 6: Ausgleichsschicht
- 7: Schälfurnier
- 8: dekorative Decksicht
- 9: Messerfurnier
- 10: Gegenzugschicht
- 11: Leimschichten
- 12: Kalibrieroberfläche
- 13: Schichtverbund
- 14: Dickenkalibrierung

## Patentansprüche

1. Schichtholzplatte (1), umfassend
- eine festigkeitsrelevante Kernschicht (4) umfassend oder gebildet durch eine OSB-Platte (5),
- eine Ausgleichsschicht (6) an wenigstens einer der beiden Flachseiten der OSB-Platte (5), welche Ausgleichsschicht (6) durch ein Schälfurnier (7) gebildet ist,
- eine dekorative Decksicht (8) an der von der OSB-Platte (5) abgewandten Flachseite des wenigstens einen Schälfurniers (7), welche dekorative Deckschicht (8) durch ein Messerfurnier (9) gebildet ist.

2. Schichtholzplatte nach Anspruch 1, wobei beide Flachseiten der OSB-Platte (5) mit je einem Schälfurnier (7) bedeckt sind.

3. Schichtholzplatte nach Anspruch 1 oder 2, wobei eines der beiden Schälfurniere (7) an der von der OSB-Platte (5) abgewandten Flachseite mit einer Gegenzugschicht (10) bedeckt ist, beispielsweise mit einem im Vergleich zur dekorativen Deckschicht (8) geringwertigeren Messerfurnier (9) bedeckt ist.

4. Schichtholzplatte nach einem der vorhergehenden Ansprüche, wobei sie aus einer einzigen OSB-Platte (5) als festigkeitsrelevante Kernschicht (4), aus je einem Schälfurnier (7) an den beiden Flachseiten der OSB-Platte (5), und aus je einem Messerfurnier (9) an den beiden von der OSB-Platte (5) abgewandten Flachseiten der beiden Schälfurniere (7) und aus zwischen diesen Schichten angeordneten Leimschichten (11) besteht.

5. Schichtholzplatte nach einem der vorhergehenden Ansprüche, wobei die OSB-Platte (5) eine Dicke zwischen 10 mm und 15 mm, das Schälfurnier (7) eine Dicke zwischen 1,5 mm und 4,0 mm, und das dekorative Messerfurnier (9) eine Dicke zwischen 0,5 mm und 1,5 mm aufweist.

6. Schichtholzplatte nach einem der vorhergehenden Ansprüche, wobei wenigstens eines der beiden Schälfurniere (7) an der von der OSB-Platte (5) abgewandten Flachseite eine Kalibrieroberfläche (12) ausbildet, welche Kalibrieroberfläche (12) durch eine Dickenkalibrierung an einem Schichtverbund (13) aus OSB-Platte (5) und Schälfurnier (7), insbesondere durch einen Schleif- oder Fräsvorgang am Schälfurnier, erhalten worden ist.

7. Schichtholzplatte nach einem der vorhergehenden Ansprüche, wobei die OSB-Platte (5) eine formaldehydfrei oder formaldehydarm aufgebaute OSB-Platte ist, beispielsweise durch eine OSB-Platte gemäß DIN EN 13986 und gemäß Formaldehyd-Klasse E1 mit einem Formaldehydgehalt von ≤ 8 mg Formaldehyd pro 100 g Werkstoff gebildet ist.

8. Schichtholzplatte nach einem der vorhergehenden Ansprüche, wobei die OSB-Platte (5), die Schälfurniere (7) und das wenigstens eine Messerfurnier (9) mittels einem formaldehydfreien oder formaldehydarmen Holzleim, beispielsweise der Beanspruchungsgruppe D4, miteinander verbunden sind.

9. Schichtholzplatte nach einem der vorhergehenden Ansprüche, wobei die OSB-Platte (5) eine Grobspanplatte ist, vorzugsweise eine OSB/3- oder OSB/4-Platte oder eine OSB/3- und OSB/4-Platte gemäß DIN EN 13986 ist, deren Späne oder Furnierstücke längs und/oder quer orientiert in mehreren Schichten angeordnet und mit einem Bindemittel verklebt sind.

10. Verfahren zum Herstellen einer Schichtholzplatte (1), insbesondere einer Schichtholzplatte nach einem der vorhergehenden Ansprüche, das Verfahren umfassend die Schritte
- Bereitstellen einer OSB-Platte (5),
- Bereitstellen von Schälfurnier (7),
- Bereitstellen von Messerfurnier (9),
- Anbringen, insbesondere Aufleimen, des Schälfurniers (7) an wenigstens einer der beiden Flachseiten der OSB-Platte (5),
- Anbringen, insbesondere Aufleimen, des Messerfurniers (9) an der von der OSB-Platte (5) abgewandten Flachseite des wenigstens einen Schälfurniers (7),
- wobei das wenigstens eine Messerfurnier (9) als dekorative Deckschicht (8) der Schichtholzplatte (1) eingesetzt wird, und
- wobei das wenigstens eine Schälfurnier (7) zwischen der OSB-Platte (5) und dem wenigstens einen Messerfurnier (9) als Ausgleichsschicht (6) für Dickentoleranzen oder Welligkeiten der OSB-Platte (5) eingesetzt wird.

11. Verfahren nach Anspruch 10, wobei nach dem Anbringen des wenigstens einen Schälfurniers (7) an der OSB-Platte (5), insbesondere nach dem Erhärten der Leimverbindung, ein Schichtverbund (13) aus OSB-Platte (5) und Schälfurnier (7) einer Dickenkalibrierung (14) unterzogen wird, beispielsweise indem ein Schleif- oder Fräsvorgang an dem wenigstens einen Schälfurnier (7) ausgeführt wird, bevor das wenigstens eine Messerfurnier (9) an dem wenigstens einen Schälfurnier (7) angebracht wird, insbesondere daran angeleimt wird.

12. Verfahren nach Anspruch 10 oder 11, wobei die Dickenkalibrierung (14) derart ausgeführt wird, dass typische Dickentoleranzen oder Welligkeiten der OSB-Platte (5) durch Materialabtragung an dem wenigstens einen Schälfurnier (7) zumindest teilweise kompensiert werden, insbesondere in einen vorbestimmten Toleranzbereich in Bezug auf eine Dicke (2) der letztendlich hergestellten Schichtholzplatte (1) gebracht werden.

13. Verfahren nach einem der Ansprüche 10 bis 12, wobei das Schälfurnier (7) durch Schälen von vorzugsweise gekochtem oder vorzugsweise gedämpftem Rundholz hergestellt ist, wobei während des Schälvorganges das Rundholz um dessen Stammachse rotiert wird.

14. Verfahren nach einem der Ansprüche 10 bis 13, wobei das Messerfurnier (9) durch Messern oder Sägen von vorzugsweise gekochtem oder vorzugsweise gedämpften Holz hergestellt ist, wobei während des Messer- oder Sägevorganges ein Schneidmesser oder ein Sägeblatt und das Holz entlang der Stammachse des Holzes relativ zueinander bewegt werden.

15. Verwendung der Schichtholzplatte (1) nach einem der Ansprüche 1 bis 9 als Bauplatte für die Errichtung von Saunen, insbesondere als Innenverkleidung von Saunen.
